# EUROPÄISCHE PATENTSCHRIFT

(11) **EP 0 763 507 B1**
(45) Veröffentlichungstag und Bekanntmachung des Hinweises auf die Patenterteilung: **31.03.1999**
(21) Anmeldenummer: 96113006.9
(22) Anmeldetag: 13.08.1996
(51) Int. Cl.: C04B 35/26, H01F 1/34

(54) **Mangan-Zink-Ferrit**
Manganese-zinc-ferrite
Ferrite de manganèse-zinc

(30) Priorität: 15.09.1995 DE 19534307
(43) Veröffentlichungstag der Anmeldung: 19.03.1997
(73) Patentinhaber: SIEMENS MATSUSHITA COMPONENTS GmbH & CO. KG, 81541 München (DE)
(72) Erfinder: Beer, August, Dr., 82041 Deisenhofen (DE); Schostek, Siegmund, 85617 Assling (DE)
(74) Vertreter: Epping, Wilhelm, Dr.-Ing.

(56) Entgegenhaltungen:
- FR-A- 2 165 961
- DATABASE WPI Section Ch, Week 8128 Derwent Publications Ltd., London, GB; Class L03, AN 81-50349D XP002020425 & JP-A-56 058 209 (IWAKIDENSHI KK) , 21.Mai 1981
- CHEMICAL ABSTRACTS, vol. 104, no. 24, 16.Juni 1986 Columbus, Ohio, US; abstract no. 217906, Y.SUENAGA: "Manganese zinc ferrite" XP002020424 & JP-A-60 262 405 (SUMITOMO SPECIALS METALS CO., LTD.)

## Beschreibung

Die vorliegende Erfindung betrifft einen Mangan-Zink-Ferrit (-MnZn-Ferrit-) nach dem Oberbegriff des Patentanspruchs 1.

Werden MnZn-Ferrite für Übertrager oder Transformatoren verwendet, so steigt aufgrund der physikalischen Natur der Ferrite mit zunehmender Frequenz nicht nur die übertragbare Leistung sondern auch die Verlustleistung an. Die Verlustleistung wird im wesentlichen durch Wirbelstrombildung in Abhängigkeit vom spezifischen elektrischen Widerstand und durch Hystereseverluste bei Ummagnetisierungsvorgängen verursacht.

Die Verlustleistung besitzt in Abhängigkeit von der Temperatur im allgemeinen ein ausgeprägtes Minimum im Temperaturbereich von etwa 20 bis 110°C und hängt im wesentlichen von der molaren Zusammensetzung des Ferrits ab. Physikalisch ist dieses Minimum durch einen Nulldurchgang der Kristallanisotropie bei der entsprechenden Temperatur bedingt. Auf beiden Seiten des Minimums steigt die Verlustleistung steil an. Verständlicherweise legt der Anwender von Ferriten, d.h. der Hersteller von Übertragern und Transformatoren, deren Betriebstemperatur in das Minimum der Verlustleistung, um möglichst geringe Energieverluste sicherzustellen.

Da es eine große Anzahl von Übertrager- und Transformatoranwendungen und damit unterschiedliche Betriebstemperaturen gibt, sind die Materialentwickler gezwungen, eine Vielzahl unterschiedlicher Werkstoffe zur Verfügung zu stellen, was teuer und umständlich ist.

Physikalisch gesprochen liegt das Minimum der Verluste genau bei derjenigen Temperatur, bei der die Anfangspermeabilität als Funktion der Temperatur ein ausgeprägtes Maximum besitzt, was auch als Permeabilitätsbuckel bzw. sekundäres Maximum bezeichnet wird. Je stärker das sekundäre Permeabilitätsmaximum bzw. das Minimum der Verluste ausgeprägt ist, um so steiler verläuft die Kristallanisotropiekonstante als Funktion der Temperatur.

Es ist an sich bekannt, daß geringe Zusätze von CoO das sekundäre Permeabilitätsmaximum und damit auch das Minimum der Verlustleistung verflacht, was im Hinblick auf einen breiteren Temperatureinsatzbereich von Übertragern und Transformatoren vorteilhaft ist.

Weiterhin ist es an sich bekannt, daß geringe Zusätze von Nb₂O₅ den spezifischen elektrischen Widerstand von Ferriten erhöhen, wodurch wiederum Wirbelströme und damit die Verlustleistung verringert werden.

Aus der JP-A-56058209 ist ein Mangan-Zink-Ferrit-Material bekannt, welches als weitere Zusätze 1 bis 3 Mol-Prozent Nb₂O₅, 0,5 bis 2 Mol-Prozent CoO und 3 bis 7 Mol-Prozent Li₂O enthält. Das Material weist einen verbesserten Temperaturkoeffizienten und eine verbesserte Charakteristik der Hysterese auf.

Aus JP-A-60262405 ist ein weiterer Mangan-Zink-Ferrit bekannt, der eine Reihe von weiteren Zusätzen enthält, die ausgewählt sind aus Siliziumoxid, Vanadiumoxid, Aluminiumoxid, Kobaltoxid, Kupferoxid und Zirkoniumoxid. Das Material zeigt eine niedrige magnetische Verlustleistung.

Der vorliegenden Erfindung liegt die Aufgabe zugrunde, einen MnZn-Ferrit anzugeben, bei dem nicht nur eine wesentlich geringere Verlustleistung gegeben ist, sondern dabei auch gleichzeitig ein breites Verlustleistungsminimum erhalten bleibt.

Diese Aufgabe wird bei einem Mangan-Zink-Ferrit der eingangs genannten Art erfindungsgemäß durch die Merkmale des Patentanspruchs 1 gelöst.

Weiterbildungen der Erfindung sind Gegenstand von Unteransprüchen.

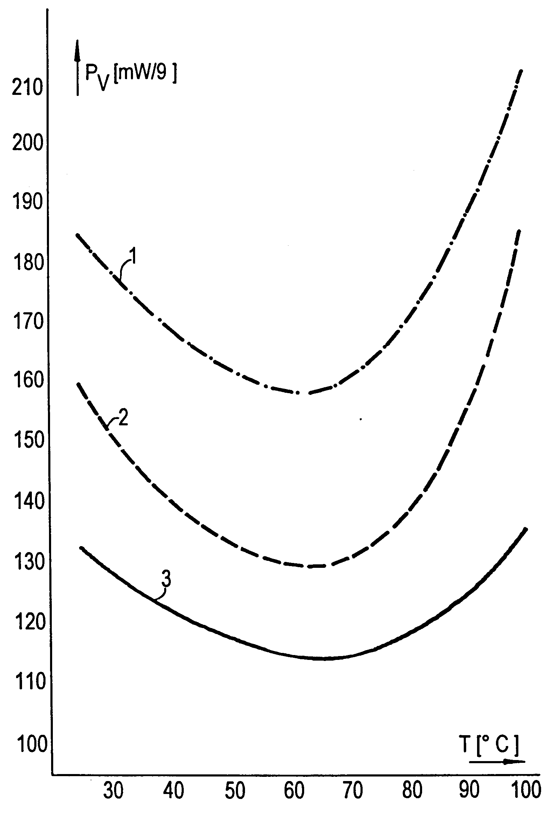

Die Erfindung wird nachfolgend anhand der einzigen Figur der Zeichnung, welche die Verlustleistung als Funktion der Temperatur für verschiedene Ferrite zeigt, näher erläutert.

Der Erfindung zugrundeliegende Untersuchungen haben überraschenderweise gezeigt, daß die kombinierte Anwendung von CoO und Nb₂O₅ gegenüber der alleinigen Anwendung von Nb₂O₅ zu einer ca. 15 bis 20% niedrigeren Verlustleistung führt und daß darüber hinaus eine starke Verflachung des Minimums der Verluste in Folge des CoO-Anteils erhalten bleibt.

Eine Erklärung für diesen Kombinationseffekt liegt vermutlich in der Bildung einer CoNb-Verbindung, die besonders wirkungsvoll den Elektronenaustausch im Ferritmaterial verringert und damit die Verluste deutlich reduziert.

Das Diagramm nach der einzigen Figur der Zeichnung, in dem die Verlustleistung P_{V} in Milliwatt pro Gramm (mW/g) als Funktion der Temperatur T in °C aufgetragen ist, erläutert die Vorteile der kombinierten Anwendung von CoO und Nb₂O₅ weiter. Eine strichpunktierte Kurve 1 zeigt dabei die Verlustleistung eines Ferrits ohne Zusatz von CoO und Nb₂O₅, eine gestrichelte Kurve 2 die Verlustleistung eines Ferrits ohne den Zusatz von CoO jedoch mit einem Zusatz von Nb₂O₅ und eine ausgezogene Kurve 3 die Verlustleistung eines erfindungsgemäßen Ferrits mit dem kombinierten Zusatz von CoO und Nb₂O₅. Diese Kurven gelten für eine Frequenz von 100 KHz und eine magnetische Induktion von 200 mT als Parameter.

Speziell gilt die Kurve 3 für eine spezielle erfindungsgemäße Ausgestaltung eines Ferrits mit einem Gehalt von CoO von 0,2 Mol% und Nb₂O₅ von 0,018 Mol%.

Weitere Hauptbestandteile eines solchen Ferrits sind dabei ein Gehalt Fe₂O₃ von etwa 53 Mol%, insbesondere 53,54 Mol%, MnO von etwa 36 Mol%, insbesondere 36,52 Mol%, ZnO von etwa 10 Mol%, insbesondere 9,94 Mol% und CaO von etwa 0,03 Mol%, insbesondere 0,029 Mol%. Vergleichswerte für die Ferrite nach den Kurven 1 bis 3 gemäß dem Diagramm der Zeichnung sind in der folgenden Tabelle angegeben.

**Tabelle**

| Zusätze in Mol% | | | | | | |
|---|---|---|---|---|---|---|
| | FE₂O₃ | MnO | ZnO | CaO | CoO | Nb₂O₅ |
| Ferrit 1 | 53,78 | 36,22 | 9,99 | 0,025 | 0 | 0 |
| Ferrit 2 | 53,83 | 36,20 | 9,97 | 0,026 | 0 | 0,02 |
| Ferrit 3 | 53,54 | 36,52 | 9,94 | 0,029 | 0,2 | 0,018 |

## Patentansprüche

1. Mangan-Zink-Ferrit auf der Basis Fe₂O₃ und MnO mit Zusätzen im wesentlichen von ZnO, CaO,
**gekennzeichnet durch** die Kombination von CoO und Nb₂O₅ als weitere Zusätze mit einem Gehalt an CoO von 0,2 Mol% und Nb₂O₅ von 0,018 Mol%.

2. Mangan-Zink-Ferrit nach Anspruch 1,
**gekennzeichnet durch** einen Gehalt an Fe₂O₃ von etwa 53 Mol%, insbesondere 53,54 Mol%, MnO von etwa 36 Mol%, insbesondere 35,52 Mol%, ZnO von etwa 10 Mol%, insbesondere 9,94 Mol% und CaO von etwa 0,03 Mol%, insbesondere 0,029 Mol%.

## Claims

1. Manganese-zinc ferrite based on Fe₂O₃ and MnO with additions essentially of ZnO, CaO, characterized by the combination of CoO and Nb₂O₅ as further additions with the level of CoO of 0.2 mol% and Nb₂O₅ of 0.018 mol%.

2. Manganese-zinc ferrite according to Claim 1, characterized by a level of Fe₂O₃ of about 53 mol%, in particular 53.54 mol%, of MnO of about 36 mol%, in particular 35.52 mol%, of ZnO of about 10 mol%, in particular 9.94 mol% and of CaO of about 0.03 mol%, in particular 0.029 mol%.

## Revendications

1. Ferrite de manganèse et de zinc, à base de Fe₂O₃ et de MnO, avec des additions essentiellement de ZnO, CaO,
caractérisé par la combinaison de CoO et de Nb₂O₅ comme additifs supplémentaires, avec une teneur en CoO de 0,2% en mole et de Nb₂O₅ de 0,018% en mole.

2. Ferrite de manganèse et de zinc suivant la revendication 1,
caractérisé par une teneur en Fe₂O₃ de 53% en mole environ, notamment de 53,54% en mole, de MnO de 36% en mole environ, notamment de 35,52% en mole, de ZnO de 10% en mole environ, notamment de 9,94% en mole et de CaO de 0,03% en mole environ, notamment de 0,029% en mole.
